# FASCICULE DE BREVET EUROPEEN

(11) **EP 2 201 844 B1**
(45) Date de publication et mention de la délivrance du brevet: **20.05.2015**
(21) Numéro de dépôt: 09306331.1
(22) Date de dépôt: 28.12.2009
(51) Int. Cl.: A22C 21/00

(54) **Procédé de bridage en continu de volailles et l'installation de mise en oeuvre**
Verfahren zum fortlaufenden Einschnüren von Geflügel und Anlage zu dessen Umsetzung
Method for continuous trussing of poultry and installation for implementing same

(30) Priorité: 29.12.2008 FR 0859103
(43) Date de publication de la demande: 30.06.2010
(73) Titulaire: Emsens Antoine, 42490 Fraisses (FR)
(72) Inventeur: Paya, Denis, 42380, Perigneux (FR)
(74) Mandataire: Thivillier, Patrick

(56) Documents cités:
- EP-A1- 0 350 399
- EP-A1- 0 413 629
- WO-A1-2008/013446
- FR-A1- 2 847 123
- FR-A1- 2 902 606

## Description

L'invention se rattache au secteur technique du bridage industriel des volailles, notamment du type poulets.

Plus particulièrement, l'invention concerne une installation de bridage en continu des volailles.

Différentes solutions techniques ont été proposées pour automatiser l'opération de bridage manuel d'une volaille.

On peut citer, par exemple, l'enseignement du brevet FR 2.847.123 dont le demandeur de la présente est également le titulaire.

La machine relevant de l'enseignement de ce brevet comprend des supports pour le positionnement des volailles, de manière à ce que le croupion et les pattes soient orientés vers le haut, ladite machine présentant au moins un poste apte à assurer le bridage des membres de la volaille au niveau de sa partie dorsale et sa partie centrale, au moyen d'un lien élastique.

Pour réaliser l'opération de bridage en continu, cette machine présente :- un bâti équipé d'un convoyeur recevant une pluralité de supports ; - des moyens pour assurer le positionnement et le maintien de la volaille dans le support au fur et à mesure de son déplacement linéaire ; - un poste de bridage équipé de moyens aptes à rapprocher simultanément les deux cuisses ; - des moyens aptes à rabattre en arrière le haut des cuisses sur les filets à l'extrémité du pilon en direction du croupion ; - au moins une pince assujettie à des moyens de commande pour être déplacée selon les trois axes X, Y, Z ;
- un poste d'évacuation de la volaille au fur et à mesure du déplacement du support pour un cycle suivant ;
- un poste de transfert de la volaille ;
- un poste de mise en place d'un lien autour du support.

En ce qui concerne l'opération mécanique de bridage, une solution avantageuse ressort de l'enseignement du brevet FR 2.902.606 où, là encore, le demandeur de la présente est le titulaire.

Selon l'enseignement de ce brevet, la volaille est disposée en appui dorsal dans un support ouvert constituant un berceau et présentant des moyens d'accrochage temporaire d'un lien élastique sous forme d'une boucle. Un moyen préhenseur et écarteur amène le lien élastique, sous forme d'une boucle, autour du support et de la volaille.

Une pince, assujettie à des moyens de commande, pour être déplacée selon les trois axes X, Y, Z, réalise les étapes fonctionnelles suivantes :
- étirer vers le haut le lien élastique par rapport au support ;
- soumettre le lien à un mouvement de pivotement de manière à croiser ses brins, sensiblement sous forme d'un « huit » ;
- positionner le lien au dessus du poitrail, au niveau du bréchet ;
- rabaisser le lien pour sa mise en place autour du corps et des ailes.

Un crochet pivotant enserre le croisement des brins du lien et pénètre partiellement dans la chair de la volaille.

A partir de cet état de la technique, le problème que se propose de résoudre l'invention est de réaliser une ligne de bridage en continu de volailles qui s'intègre parfaitement avec une ligne d'abattage/éviscération avec pour objectif, outre les avantages liés à un bridage automatique, d'augmenter la productivité et de pouvoir brider des poulets de calibres différents.

Pour résoudre un tel problème, il a été conçu et mis au point un procédé de bridage en continu de volailles, selon lequel :
- on transfert les volailles depuis une ligne d'abattage/éviscération, sur une chaîne de bridage déplaçable linéairement ;
- on accroche les volailles transférées en position verticale au niveau des tarses ;
- on relève les volailles en position sensiblement horizontale au fur et à mesure du déplacement linéaire ; on rabat les ailes et on exerce un effort de compression longitudinal, à partir du bréchet ;
- on réalise l'opération de bridage au moyen d'une boucle élastique ;
- on éjecte des volailles bridées.

Avantageusement, l'opération de bridage est du type de celle décrite dans le brevet précité FR 2.902.606 en comprenant les phases suivantes :
- formation d'une boucle élastique ;
- formation d'un « huit » à partir de la boucle pour constituer un lien ;
- mise en place du lien autour de la volaille.

Pour la mise en oeuvre du procédé, l'installation comprend :
- un organe de transfert de volailles depuis une ligne d'abattage/éviscération sur une chaîne de bridage ;
- une chaîne de bridage constituée par une pluralité de modules support présentant des moyens d'accrochage en position verticale des volailles et assujettie à des organes de commande pour déplacer linéairement en continu chaque module ;
- des moyens de relevage des volailles en position sensiblement horizontale au fur et à mesure du déplacement linéaire ; - des moyens de compression des volailles ; - un poste de bridage apte à disposer un lien élastique autour de la volaille en formant un « huit » ; - des moyens d'éjection des volailles bridées.

La conception de l'installation est donc du type modulaire, les étapes de bridage étant réparties le long d'une chaîne de production équipée de modules support permettant l'accrochage des volailles par les pattes.

Un problème important que se propose de résoudre l'invention est de pouvoir intégrer l'installation de bridage à une ligne d'abattage/éviscération, comme par exemple celle du document WO 2008/013446, en assurant une continuité dans la chaîne de production depuis l'abattage jusqu'à l'évacuation de la volaille bridée.

Pour résoudre un tel problème une installation selon la revendication 1 est proposée, dans laquelle l'organe de transfert des volailles comprend au moins un élément préhenseur apte à saisir la volaille, ledit élément étant assujetti à des moyens de commande en pivotement et en translation pour retourner de 180° la volaille et la positionner sur les moyens d'accrochage des modules de la ligne de bridage. L'organe préhenseur présente un moyen d'éjection de la volaille entre l'élément préhenseur et les moyens d'accrochage.

Pour résoudre le problème posé de garder les gestes naturels des personnes intervenant normalement dans une chaîne d'abattage, les moyens d'accrochage sont constitués par des crochets coopérant au niveau des tarses, lesdits crochets étant accouplés à un support oscillant présentant des éléments d'appui de la volaille en position accrochée.

Pour résoudre le problème posé de positionner le module support équipé de la volaille au niveau du poste de bridage, afin de réaliser cette opération dans les meilleures conditions, le support oscillant présente au moins un organe de roulement apte à coopérer avec une rampe au fur et à mesure du déplacement linéaire pour provoquer, d'une manière concomitante, le relevage dudit support en position sensiblement horizontale en regard des moyens de compression.

Un autre problème que se propose de résoudre l'invention est de conformer la volaille avant l'opération de bridage en tant que telle, afin de la rendre la plus compacte possible.

Pour résoudre un tel problème, les moyens de compression sont combinés avec une plaque support coopérant avec une partie de la volaille en position horizontale, ladite plaque présentant des moyens pour rabattre les ailes en constituant un coffre ouvert pour l'engagement desdits moyens de compression sous forme d'un patin d'appui assujetti à un vérin.

Pour résoudre le problème posé d'assurer l'opération de bridage en tant que telle, le poste de bridage comprend des moyens pour la formation d'une boucle élastique, des moyens aptes à conformer la boucle élastique en forme de « huit », des moyens de mise en place de la boucle en forme de « huit » autour du support oscillant où est positionnée la volaille.

Selon une autre caractéristique, les moyens d'éjection sont combinés avec des moyens de pesée de la volaille bridée pour diriger ladite volaille sur un tapis avec des positions prédéterminées en fonction du poids de la volaille.

L'invention est exposée ci-après plus en détail à l'aide des figures des dessins annexés dans lesquels :
- la figure 1 est une vue en perspective à caractère schématique montrant l'ensemble de la ligne de bridage depuis l'accrochage jusqu'à l'éjection ;
- la figure 2 est une vue de face d'un module support
- la figure 3 est une vue de côté correspondant à la figure 2 ;
- la figure 4 est une vue en perspective d'un module support ;
- la figure 5 est une vue partielle en perspective montrant le relevage des modules support au fur et à mesure de l'avancement linéaire ;
- la figure 6 est une vue en perspective d'une partie de la chaîne considérée au niveau du poste de compression des volailles ;
- les figures 7, 8, 9, 10 et 11 sont des vues en perspective à caractère schématique montrant le principe de mise en position des ailes le long du corps de la volaille et la compression du corps en longitudinal ;
- la figure 12 est une vue en plan du poste de bridage assorti du poste de compression ;

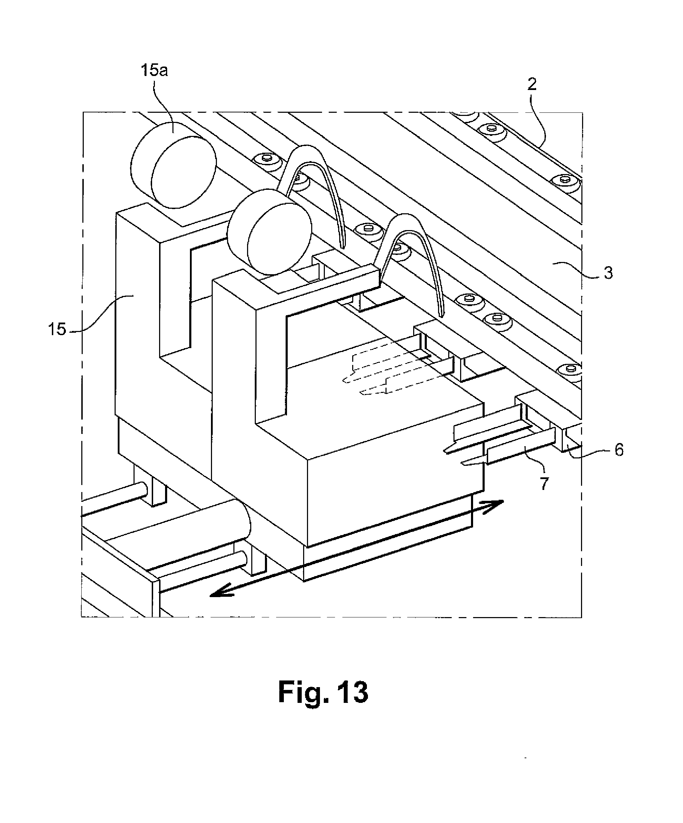

- la figure 13 est une vue en perspective d'une forme de réalisation du poste de bridage au niveau de la formation de la boucle élastique ;
- la figure 14 est une vue en perspective montrant la mise en place du lien autour du support ;
- la figure 15 est une vue partielle en perspective des moyens pour la formation du « huit » de la boucle élastique ;
- les figures 16, 17, 18, 19 et 20 montrent, par des vues à caractère schématique, le principe de bridage en automatique de la volaille ;
- la figure 21 est une vue en perspective montrant le principe de l'organe de transfert ;
- la figure 22 est une vue partielle en perspective montrant le principe de l'éjection automatique de la volaille avec tri pondéral.

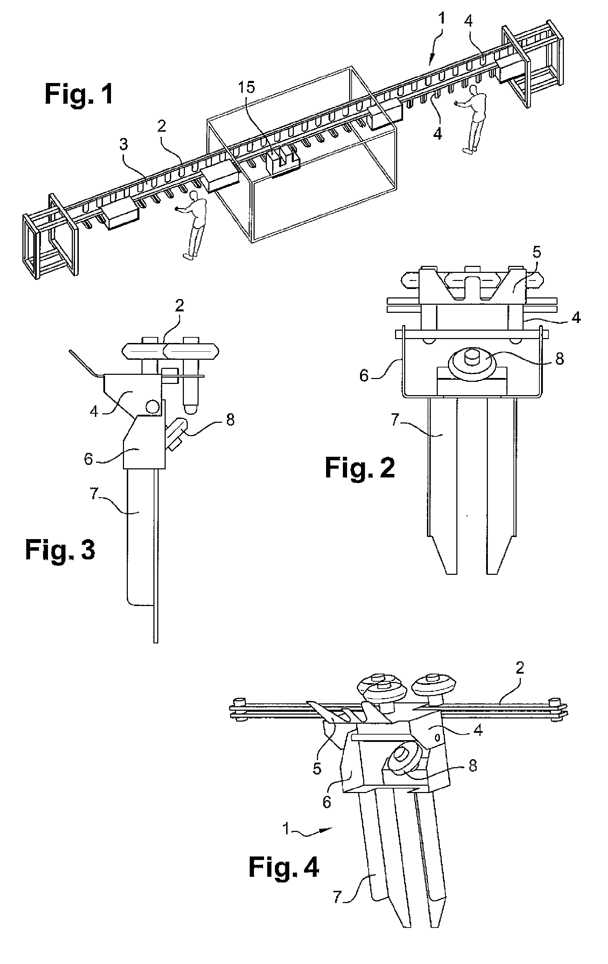

Comme le montre notamment la figure 1, la ligne de bridage est constituée par une pluralité de modules support (1) assujettie à une chaîne sans fin (2) constituant une boucle alimentée en continu par rapport à un bâti support (3) en étant, par exemple, asservie à un automate programmable. A titre indicatif, la ligne de bridage a une longueur comprise entre 10 et 15 mètres.

Comme il sera indiqué dans la suite de la description, la ligne de bridage est caractérisée par des moyens spécifiques pour exécuter les principales fonctions suivantes :
- après transfert, accrochage des volailles (V), en position verticale au niveau des tarses ;
- relevage des volailles (V) en position sensiblement horizontale au fur et à mesure du déplacement linéaire de la chaîne (2) ;
- compression longitudinale de la volaille (V) après avoir rabattu les ailes (V1) ;
- bridage de la volaille (V) au moyen d'une boucle élastique sous forme d'un « huit » ;
- éjection de la volaille bridée.

Comme indiqué, l'accrochage des volailles s'effectue en position verticale.

Dans ces conditions, chaque module support (1) présente des moyens d'accrochage (4) rendus solidaires de la chaîne (2). Ces moyens d'accrochage (4) présentent des crochets (5) conformés pour permettre le maintien des volailles au niveau des tarses.

Comme le montrent notamment les figures 2, 3 et 4, ces crochets (5), ont une forme sensiblement en W et sont du type de ceux couramment utilisés dans une ligne d'abattage/éviscération, pour permettre la suspension des volailles.

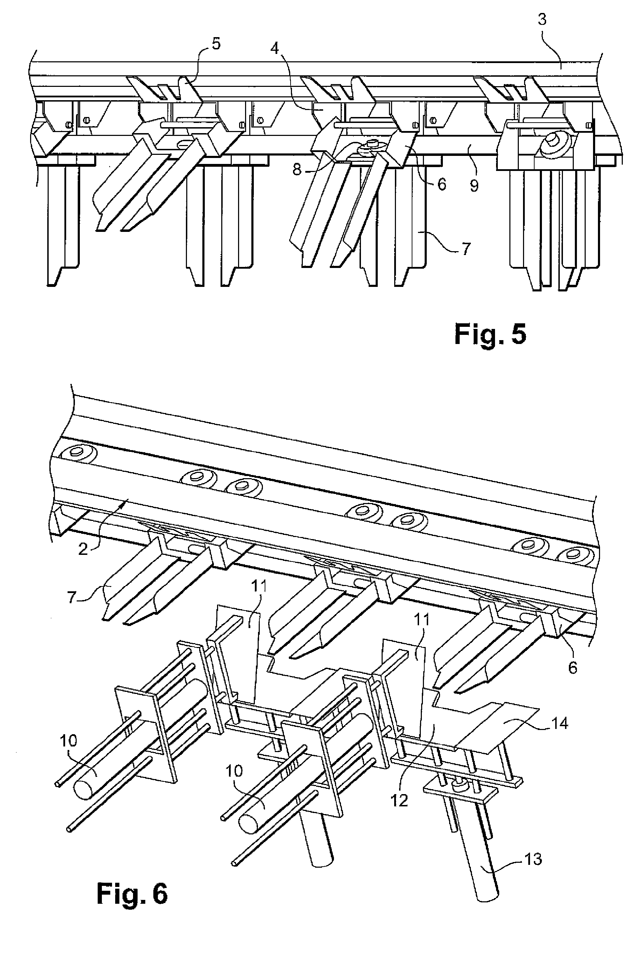

Les moyens d'accrochage (4) reçoivent un support oscillant (6) présentant des éléments d'appui (7) de la volaille en position accrochée. Par exemple, les éléments d'appui (7) sont constitués par deux bras parallèles de section transversale équerrée. Chaque support oscillant (6) présente au moins un organe de roulement (8) apte à coopérer avec une rampe (9) au fur et à mesure du déplacement linéaire de la chaîne (2) pour provoquer, d'une manière concomitante, le relevage dudit support (4) en position sensiblement horizontale (figure 5).

Selon une autre caractéristique, des moyens de compression des volailles sont disposés au droit de la chaîne (2) et en regard d'au moins un support oscillant (6), lorsque ce dernier est en position horizontale. Dans l'exemple illustré figure 6, la ligne de bridage présente deux moyens de compression, disposés côte à côte.

Les moyens de compression sont, par exemple, constitués par un vérin (10) dont la tige est équipée en bout d'un patin d'appui (11). Ces moyen de compression (10) - (11) sont montés en combinaison avec une plaque support (12), également assujettie à un vérin (13) pour être commandée en hauteur et apte à coopérer avec une partie de la volaille (V) en position horizontale. La plaque (12) présente, latéralement, de chaque côté, des volets (14) pour rabattre les ailes de la volaille en constituant un coffre ouvert pour l'engagement du patin d'appui et de compression (11).

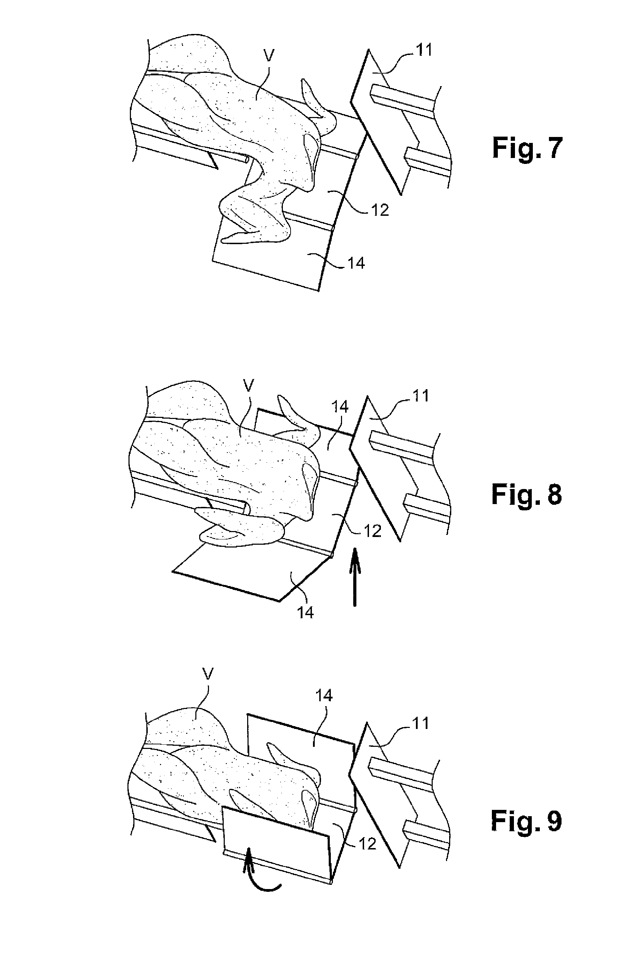

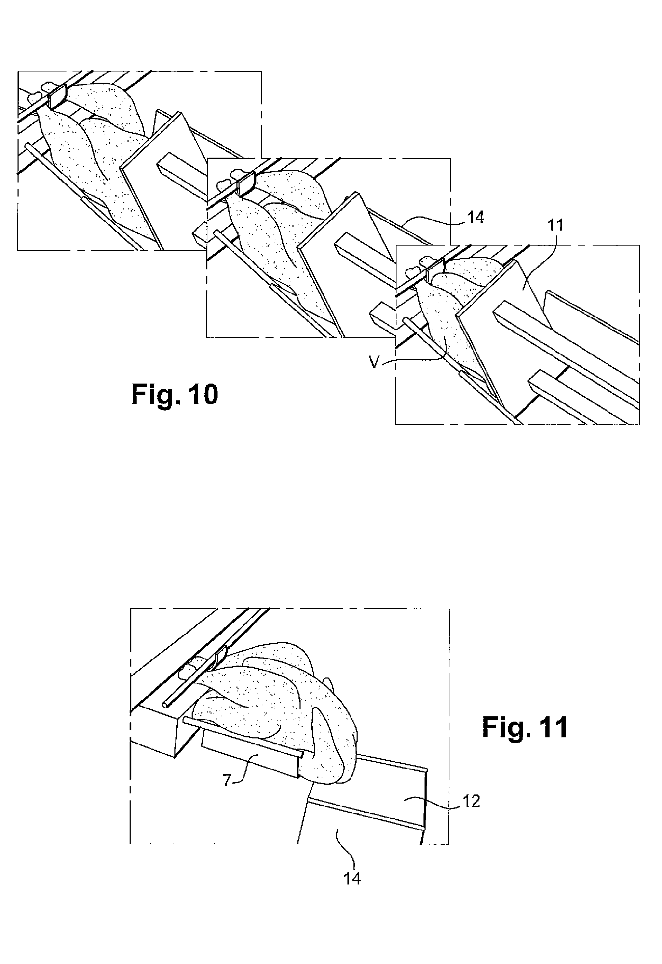

On renvoie aux figures 7 à 11 qui montrent le principe de compression de la volaille (V). A la figure 7, la volaille est toujours accrochée par les tarses sur les crochets (5) et en appui sur la plaque (12). La plaque (12) est ensuite déplacée en hauteur (figure 8) et les volets (14) rabattus pour rabattre, d'une manière concomitante, les ailes contre le poitrail de la volaille (figure 9). Le vérin (10) est ensuite actionné pour assurer la compression de la volaille au moyen du patin (11) (figure 10). La plaque (12) est ensuite rabaissée (figure 11). Les volailles sont ensuite déplacées au niveau du poste de bridage en tant que tel.

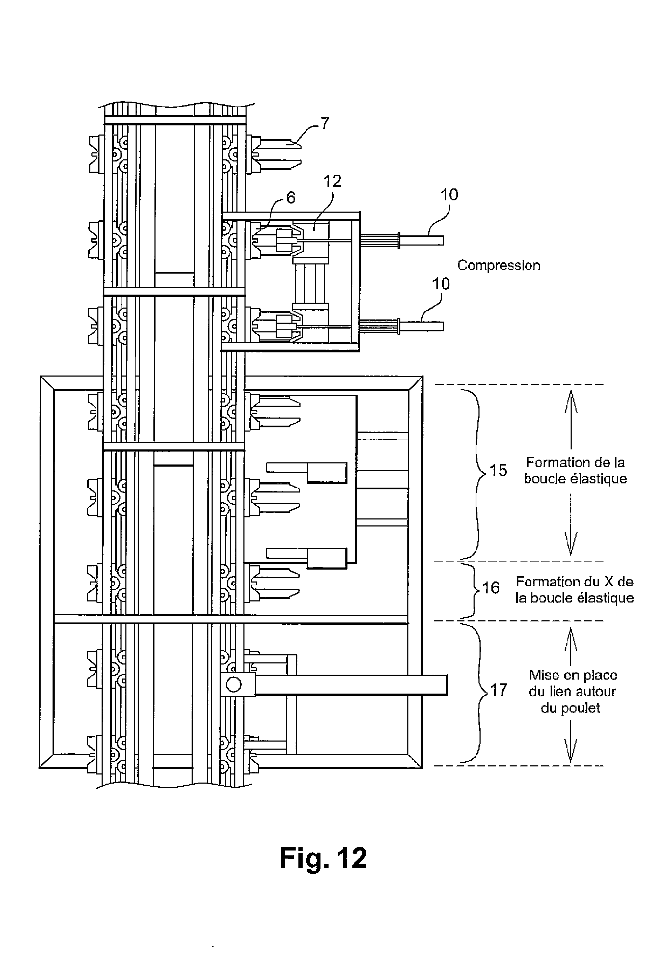

Comme indiqué, l'opération automatique de bridage comprend les grands principes définis dans le brevet FR 2.902.606. Ainsi, le poste de bridage comprend, pour l'essentiel, des moyens (15) pour la formation d'une boucle élastique, des moyens (16) aptes à conformer la boucle élastique sensiblement en forme de «huit» ou de X, et des moyens (17) pour la mise en place de la boucle en forme de « huit » autour du support oscillant (6) où est positionnée la volaille. La formation de la boucle élastique (18) est réalisée par un ensemble mécanique déjà utilisé dans d'autres domaines d'application. Dans l'exemple illustré figures 11 et 12, la chaîne de bridage présente deux ensembles mécaniques (15) pour la formation de la boucle élastique. Ces ensembles (15) sont amovibles pour être interchangeables et sont alimentés en fils élastiques par de grosses bobines (15a).

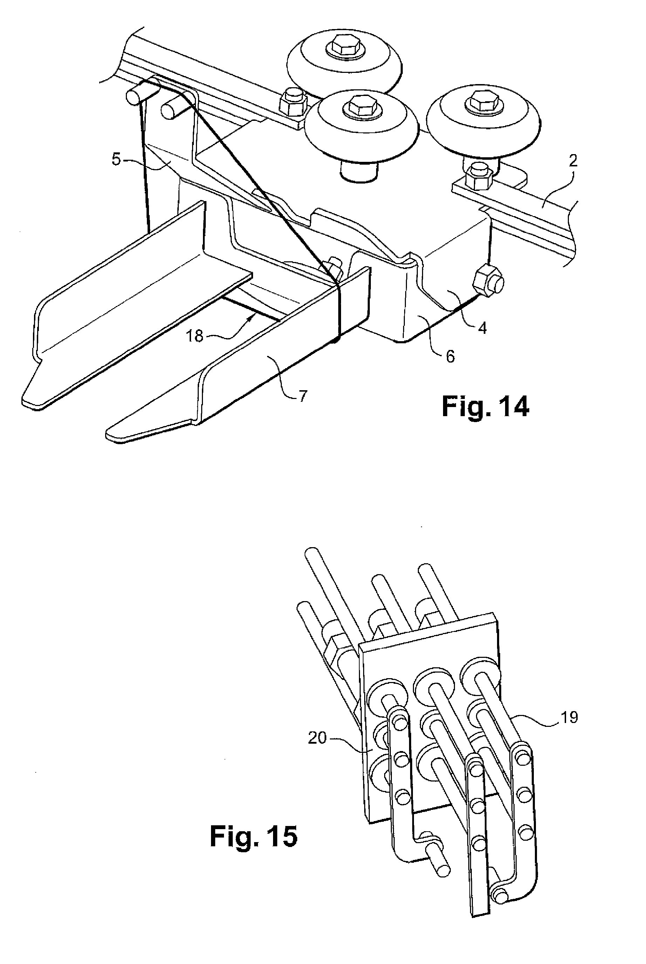

Comme le montre la figure 14, le lien élastique, sous forme de boucle (18), est disposé autour du support oscillant (6), la volaille étant mise en contact avec le lien.

La formation du « huit » s'effectue pendant l'avance de la chaîne, par l'intermédiaire de doigts de reprise (19) disposés sur un support fixe (20) le long de la chaîne et en amont des ensembles mécaniques de formation de la boucle.

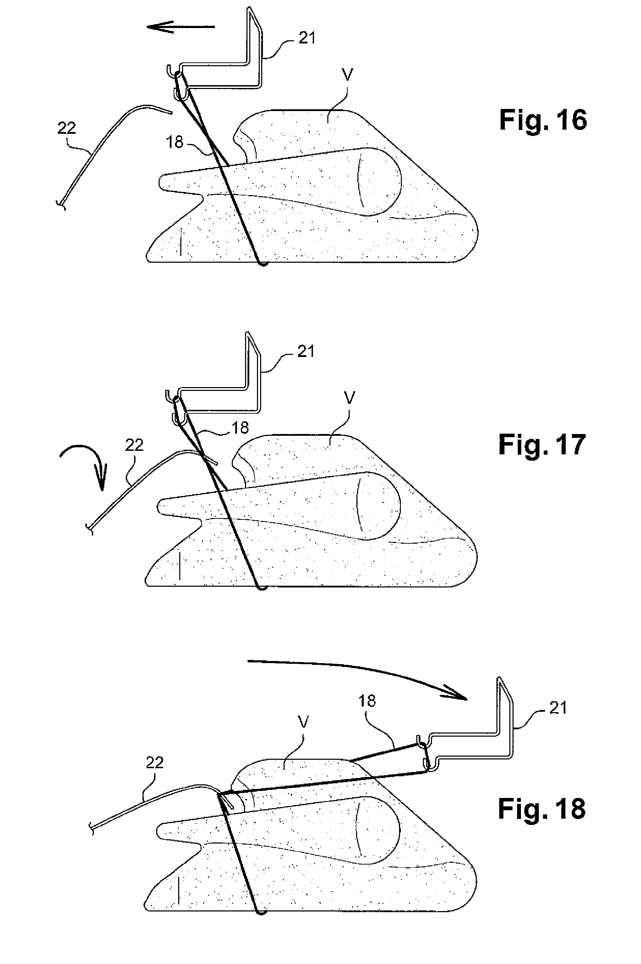

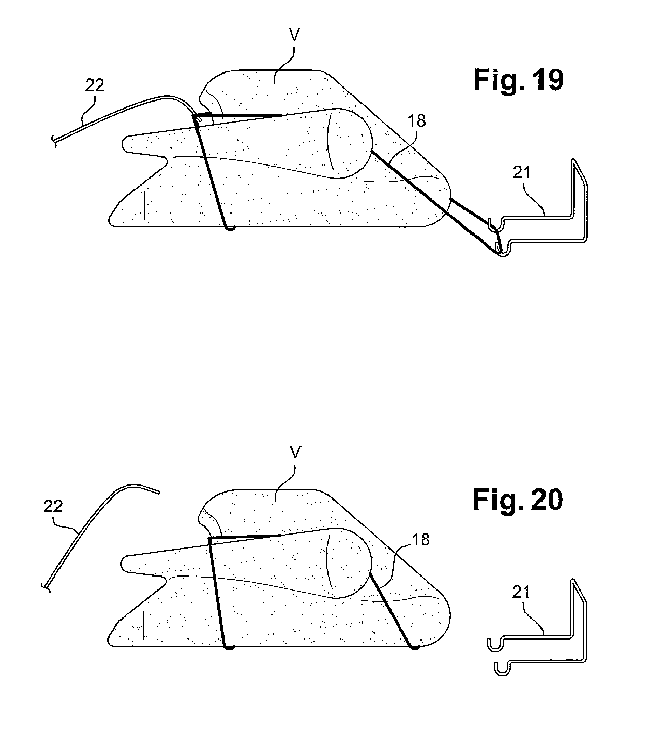

On renvoie aux figures 16 à 20 qui montrent le principe de bridage à partir de la broche élastique (18) disposée, comme indiqué, autour du support (6). Une pince (21) saisit la broche élastique (18) et la libère de l'ensemble support (6) (figure 16). Un crochet pivotant (22) est rabattu de manière à positionner le croisillon du lien (18) sous le bréchet au niveau du croupion (figure 17). La pince (21) est ensuite déplacée linéairement au dessus de la volaille, de façon à suivre son profil, le croisillon du lien étant toujours retenu au niveau du crochet (22) (figure 18). La pince (21) est ensuite rabaissée à l'avant de la volaille, au niveau des ailes, en relâchant le lien élastique. Le crochet (22) est alors ramené en position initiale, ce qui a pour effet de libérer le croisillon qui se positionne automatiquement sous le bréchet. (figure 20). La pince (21) est ensuite ramenée en position initiale. Comme indiqué, le poste de bridage est conformé pour brider deux poulets à la fois.

Après cette opération de bridage, les volailles sont évacuées de la chaîne. Par exemple, les volailles bridées sont éjectées sur un tapis (23) présentant des positions préétablies (23a). Un poste d'aiguillage (24), équipé de plusieurs systèmes d'éjection, pousse la volaille sur un tapis d'éjection en fonction du poids de la volaille.

Selon une caractéristique importante de l'invention, en considérant que les volailles sont accrochées en position verticale, au niveau des tarses, sur les supports, la chaîne de bridage peut aisément être associée à une ligne classique d'abattage/éviscération où les poulets sont également accrochés en position verticale au niveau des tarses.

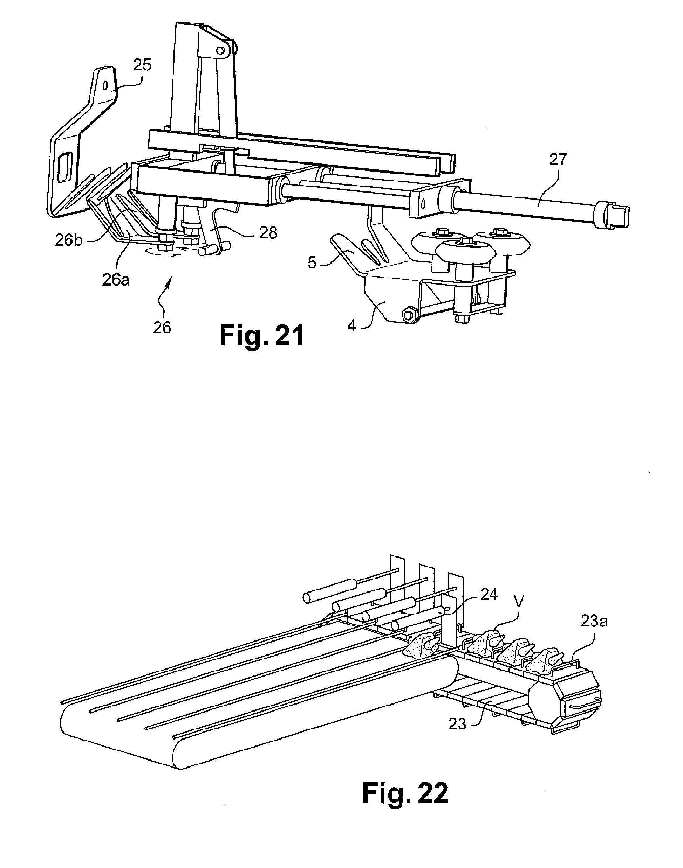

Dans ce but, un organe de transfert permet d'assurer le chargement automatique de la ligne de bridage depuis la sortie d'une ligne d'abattage/éviscération. On renvoie à la figure 21 qui montre les crochets (25) d'une ligne d'abattage éviscération, à partir desquels sont accrochés, en position verticale, les volailles. L'organe de transfert a donc pour fonction de réceptionner la volaille éjectée mécaniquement du crochet (25) de la chaîne d'abattage/éviscération, de la déplacer, et de l'orienter avant de la transférer sur le crochet (5) de la ligne de bridage.

Dans ce but, l'organe transfert de la volaille comprend au moins un élément préhenseur (26) apte à saisir la volaille. L'élément préhenseur (26), présente deux crochets (26a), (26b) et est assujetti à des moyens de commande en pivotement et en translation (27) pour retourner de 180° la volaille et la positionner sur les crochets (5) des modules support (6) de la ligne de bridage. Lors du déplacement linéaire du système de préhension, chaque crochet (26a) et (26b) est soumis, comme indiqué, à une rotation de 180° sur son axe vertical, l'un tournant dans le sens horaire et l'autre en sens inverse permettant, par conséquent, de régler le problème d'orientation des volailles dos - bréchet.

Les avantages ressortent bien de la description, en particulier on souligne et on rappelle :
- l'applicabilité du concept du bridage dans une logique de ligne de production ;
- le transfert des volailles à partir d'une ligne d'abattage/ éviscération sur la ligne de bridage ;
- l'ergonomie du poste de travail ;
- l'aspect modulaire de l'installation ;
- la possibilité de réaliser la ligne de bridage dans différentes configurations géométriques.

## Revendications

1. Installation de bridage en continu de volailles comprenant un organe de transfert (26) de la volaille depuis une ligne d'abattage/éviscération sur une chaîne de bridage, comprenant:
un organe de transfert comprenant au moins un élément préhenseur (26a) - (26b) apte à saisir la volaille, ledit élément étant assujetti à des moyens de commande en pivotement et en translation pour retourner de 180° la volaille et la positionner verticalement au niveau des tarses sur des moyens d'accrochage (4) que présentent des modules de la chaîne de bridage;
des moyens d'accrochage (4), en position verticale des volailles, assujettis à des organes de commande pour déplacer linéairement en continu chaque module, ladite chaîne comprenant en outre :
- des moyens de relevage (8) - (9) des volailles en position sensiblement horizontale au fur et à mesure du déplacement linéaire de chaque module;
- des moyens de compression (11) des volailles aptes à rabattre les ailes et exercer un effort de compression longitudinal à partir du bréchet;
- un poste de bridage (15) apte à disposer un lien élastique autour de la volaille en formant un « huit » ;
- des moyens d'éjection (24) des volailles bridées.

2. Installation selon la revendication 1, **caractérisée en ce que** l'organe préhenseur présente un moyen d'éjection (28) de la volaille entre l'élément préhenseur et les moyens d'accrochage (4).

3. Installation selon la revendication 1, **caractérisée en ce que** les moyens d'accrochage (4) sont constitués par des crochets (5) coopérant au niveau des tarses, lesdits crochets (5) étant accouplés à un support oscillant (6) présentant des éléments d'appui (7) de la volaille en position accrochée.

4. Installation selon la revendication 3, **caractérisée en ce que** le support oscillant (6) présente au moins un organe de roulement (8) apte à coopérer avec une rampe (9) au fur et à mesure du déplacement linéaire pour provoquer, d'une manière concomitante, le relevage dudit support (6) en position sensiblement horizontale en regard des moyens de compression (11).

5. Installation selon la revendication 1, **caractérisée en ce que** les moyens de compression (11) sont combinés avec une plaque support (12) coopérant avec une partie de la volaille en position horizontale, ladite plaque (12) présentant des moyens (13) pour rabattre les ailes en constituant un coffre ouvert pour l'engagement desdits moyens de compression (9) sous forme d'un patin d'appui (11) assujetti à un vérin (10).

6. Installation selon la revendication 1, **caractérisée en ce que** le poste de bridage comprend des moyens (15) pour la formation d'une boucle élastique, des moyens (16) aptes à conformer la boucle élastique en forme de « huit », des moyens (18) de mise en place de la boucle en forme de « huit » autour du support oscillant (6) où est positionnée la volaille.

7. Installation selon la revendication 3, **caractérisée en ce que** les moyens d'éjection (24) sont combinés avec des moyens de pesée de la volaille bridée pour diriger ladite volaille sur un tapis avec des positions prédéterminées en fonction du poids de la volaille.

## Patentansprüche

1. °/ Kontinuierliche Einspannanlage für Geflügel, umfassend ein Transferorgan (26) des Getlügels ausgehend von einer Schlacht-/Ausweidungslinie auf einem Einspannband, umfassend:
ein Transferorgan, umfassend wenigstens ein Greiferelement (26a) - (26b), das geeignet ist, das Geflügel zu ergreifen, wobei das genannte Element Steuermitteln im Schwenken und in Translation untergeordnet ist, um das Geflügel um 180° umzudrehen und es vertikal an den Fußwurzeln auf den Befestigungsmitteln (4) zu positionieren, die die Module des Einspannbandes aufweisen;
der Befestigungsmittel (4) in vertikaler Position des Geflügels, die Steuerorganen zur linearen, kontinuierlichen Verschiebung jedes Moduls untergeordnet sind, wobei die genannte Kette darüber hinaus umfasst:
- Anhebemittel (8) - (9) des Geflügels in deutlich horizontaler Position im Verlauf der linearen Verschiebung jedes Moduls;
- Komprimierungsmittel (11) des Geflügels, die geeignet sind, es umzuschlagen und einen Komprimierungsdruck in Längsrichtung ausgehend vom Brustbeinkamm auszuüben;
- einen Einspannposten (15), der geeignet ist, eine elastische Bindung rund um das Geflügel anzuordnen, indem eine "Acht" gebildet wird;
- Auswurfmittel (24) des eingespannten Geflügels.

2. °/ Anlage gemäß Anspruch 1, **dadurch gekennzeichnet, dass** das Greiferorgan ein Auswurfmittel (28) des Geflügels zwischen dem Greiferorgan und den Befestigungsmitteln (4) aufweist.

3. °/ Anlage gemäß Anspruch 1, **dadurch gekennzeichnet, dass** die Befestigungsmittel (4) durch an den Fußwurzeln zusammenwirkende Haken (5) gebildet sind, wobei die genannten Haken (5) an einem Stützelemente (7) des Geflügels in befestigter Position aufweisenden schwenkenden Träger (6) gekoppelt sind.

4. °/ Anlage gemäß Anspruch 3, **dadurch gekennzeichnet, dass** der schwenkende Träger (6) wenigstens ein Rollorgan (8) aufweist, das geeignet ist, mit einer Rampe (9) im Verlauf der linearen Verschiebung zusammenzuwirken, um gleichzeitig das Anheben des genannten Trägers (6) in einer deutlich horizontalen Position gegenüber den Komprimierungsmitteln (11) hervorzurufen.

5. °/ Anlage gemäß Anspruch 1, **dadurch gekennzeichnet, dass** die Komprimierungsmittel (11) mit einer mit einem Teil des Geflügels in horizontaler Position zusammenwirkenden Trägerplatte (12) kombiniert sind, wobei die genannte Platte (12) Mittel (13) aufweist, um die Flügel unter Bildung eines offenen Fachs für das Eingreifen der genannten Komprimierungsmittel (9) in Form einer einem Zylinder (10) unterworfenen Stützkufe (11) umzuschlagen.

6. °/ Anlage gemäß Anspruch 1, **dadurch gekennzeichnet, dass** der Einspannposten Mittel (15) für die Bildung einer elastischen Schlaufe, Mittel (16), die geeignet sind, die elastische Schlaufe in Form einer "Acht" zu bilden, Mittel (18) zum Einsetzen der Schlaufe in Form einer "Acht" rund um den schwenkenden Träger (6) umfasst, an dem das Geflügel positioniert ist.

7. °/ Anlage gemäß Anspruch 3, **dadurch gekennzeichnet, dass** die Auswurfmittel (24) mit Wiegemitteln des eingespannten Geflügels kombiniert sind, um das genannte Geflügel auf einer Matte mit vorbestimmten Positionen in Abhängigkeit von dem Gewicht des Geflügels zu führen.

## Claims

1. A system for continuous truss for the poultry structure comprising a transfer member (26) for the poultry from a slaughtering/evisceration section on a trussing assembly line comprising:
a transfer member comprising at least one clamping component (26a) - (26b) suitable for holding the poultry, the said component being operated by the mechanism that controls the swivelling and sliding in order to rotate the poultry by 180° and position it vertically on the hanging mechanism (4) with the units of the trussing assembly line;
the hanging mechanism (4) holds the poultry in a vertical position, operated by the control devices for continuously moving every unit in a linear direction, the said assembly line additionally comprising:
- the mechanism for lifting (8) - (9) the poultry in a horizontal position for gradually moving every unitin a linear direction;
- the mechanism for compressing (11) the poultry for the purpose of folding the sidewalls and apply longitudinal compression force through the sternum;
- a clamping station (15) suitable for creating a flexible band around the poultry in the shape of an "eight";
- the mechanism for discharging (24) the poultry trusses.

2. The assembly in accordance with claim 1, is such way that the clamping component has a mechanism for discharging (28) the poultry between the clutching component and the hanging mechanism (4).

3. The assembly in accordance with claim 1, in such way that the hanging mechanism (4) is composed of hooks (5) connected to the tarsus, the said hooks (5) being connected to an oscillating support (6) with the support elements (7) for the poultry in a hung position.

4. The assembly in accordance with claim 3, in such way that the oscillating support (6) has at least one rotating mechanism (8) suitable of being connected to a ramp (9) as it gradually moves in a linear direction to carry out in a simultaneous manner, the lifting of the said support (6) in a horizontal position when compared to the compressing mechanism (11).

5. The assembly in accordance with claim 1, in such way that the compressing mechanism (11) is connected to a support plate (12) along with a part of the poultry in a horizontal position, the said plate (12) has the mechanism (13) to fold the sidewalls by way of creating an open compartment so that the said compressing mechanisms come into play (9) in the form of a sliding support (11) operated by an actuator (10).

6. The assembly in accordance with claim 1, in such way that the clamping station comprises the mechanisms (15) for forming an elastic loop, mechanisms (16) suitable of giving the elastic loop the shape of an "eight", mechanisms (18) for arranging the loop in the shape of an "eight" around the oscillating support (6) where the poultry is positioned.

7. The assembly in accordance with claim 3, in such way that the discharging mechanisms (24) are connected to the weighing mechanisms for the poultry truss to guide the said poultry on flooring with predetermined positions based on the poultry weight.
